Europäisches Patentamt

European Patent Office

Office européen des brevets

(11) Veröffentlichungsnummer: **0 467 171 A2**

## EUROPÄISCHE PATENTANMELDUNG

(21) Anmeldenummer: **91111202.7**

(22) Anmeldetag: **05.07.91**

(51) Int. Cl.5: **H02B 1/20**

(30) Priorität: **09.07.90 DE 4021824**

(43) Veröffentlichungstag der Anmeldung:
**22.01.92 Patentblatt 92/04**

(84) Benannte Vertragsstaaten:
**AT DE FR GB IT**

(71) Anmelder: **ABB PATENT GmbH
Kallstadter Strasse 1
W-6800 Mannheim 31(DE)**

(72) Erfinder: **Velten, Walter
Carl-Goerdeler-Strasse 1**

**W-6830 Schwetzingen(DE)**
Erfinder: **Schmitt, Hermann
Im Vogelskorb 1
W-6801 Edingen(DE)**
Erfinder: **Leible, Erwin
Michelberg 40
W-6932 Hirschhorn(DE)**

(74) Vertreter: **Rupprecht, Klaus, Dipl.-Ing. et al
c/o ABB Patent GmbH, Patentabteilung,
Postfach 10 03 51
W-6800 Mannheim 1(DE)**

(54) **Verteileranlage mit auf einem Tragorgan aneinanderreihbaren elektrischen Installationsgeräten in Schmalbauweise.**

(57) Eine Verteileranlage mit auf wenistens einem Tragorgan nebeneinander anreihbaren elektrischen Installationsgeräten in Schmalbauweise, deren Stromeinspeisung mittels mehreren, den Installationsgeräten auf diesem Tragorgan gemeinsam zugeordneten Stromschienen bzw. mittels eines mehrphasigen Stromschienenblocks erfolgt, weist an den Installationsgeräten angeordnete klemmbackenartig zueinander federnde Kontaktorgane auf, die bei einer angenähert senkrecht zur Aufnahmeebene des Tragorgans erfolgenden Zuführung der Installationsgeräte an das Tragorgan jeweils eine zugeordnete Stromschiene beidseitig kontaktieren. Diese Verteileranlage bzw. deren Installationsgeräte zeichnen sich dadurch aus, daß die Kontaktorgane (19) der mit den Stromschienen (20, 22, 23 in 18) zu kontaktierenden Installationsgeräte (17) in diesen fest und unverschieblich gehalten und so gelegen sind, und daß sie - bezogen auf eine zum Tragorgan gerichtete Abschlußebene der Gehäuse der Installationsgeräte - oberhalb einer Aussparung (24) in diesen Gehäusen enden. In diese Aussparungen ist ein den an diesem Tragorgan angeordneten Installationsgeräten gemeinsamer Stromschienenblock (18) einfügbar, der über die Aussparungen nicht oder nur unwesentlich hinausragt. Von den einzelnen Stromschienen des Stromschienenblocks (18; 25) gehen in Abständen angeordnete, an sich bekannte Kontaktlaschen (21) aus, die sich bei der Montage der Installationsgeräte in deren Kontaktorgane kontaktierend einfügen.

Fig. 2

Die Erfindung bezieht sich auf eine Verteileranlage mit auf Wenigstens einem Tragorgan nebeneinander anreihbaren elektrischen Installationsgeräten in Schmalbauweise, deren Stromeinspeisung mittels mehreren, den Installationsgeräten auf diesem Tragorgan gemeinsam zugeordneten Stromschienen bzw. mittels eines mehrphasigen Stromschienenblocks erfolgt, wobei an den Installationsgeräten angeordnete federnde, klemmbackenartige Kontaktorgane bei einer angenähert senkrecht zur Aufnahmeebene des Tragorgans erfolgenden Zuführung der Installationsgeräte an das Tragorgan jeweils eine zugeordnete Stromschiene beidseitig kontaktieren.

Bei der konventionellen Installationstechnik für Verteileranlagen, wie sie für Einzelhaushalte, Mehrfamilienhäuser, Bürogebäude und vergleichbare Baulichkeiten vorgesehen sind, werden die einzelnen Installationsgeräte über eine aufwendige Einzelverdrahtung stromeingangsseitig mit Spannung versorgt. Diese Verdrahtungstechnik ist sehr zeitaufwendig und kann in aller Regel nicht fabrikseitig vorgefertigt werden.

Zur Vereinfachung der Installationsarbeiten am Aufstellungsort und somit zur Kostenverbilligung ist man zunehmend dazu übergegangen, sogenannte Verdrahtungshilfen fabrikseitig vorzufertigen, beispielsweise solche in Gestalt von Kammschienen, Phasenschienen und dergleichen. Für den zur Rede stehenden Zweck ist beispielsweise ein Sammelschienenblock bekannt geworden, wie er dem DE-GM 87 00 153 zu entnehmen ist. Ein solcher dreipoliger Sammelschienenblock dient der Spannungsversorgung Schalterpole von Schaltgeräten, die also alle gleichzeitig mit den ihnen zugeordneten Stromphasen verbunden werden können. Die einzelnen Sammelschienen, die - gegeneinander isoliert - in einem mehrwandigen Kastenprofil aus Isolierstoff angeordnet und gehalten sind, weisen in regelmäßigen Abständen Anschlußlaschen auf, die von der Anschlußseite der einzelnen Installationsgeräte her unmittelbar in deren Schraubanschlußbuchsen eingefügt werden. Eine derartige Anschlußtechnik ist, insbesondere wenn es sich um Verteileranlagen mit einer größeren Anzahl von Installationsgeräten handelt, durchaus zeitsparend und zudem auch noch platzsparend. Ein Nachteil hierbei ist aber darin zu sehen, daß bei sogenannten Nachinstallationen die gesamte zugangsseitige Verdrahtung aller auf einer Tragschiene angeordneten und mit dem Sammelschienenblock verbundenen Installationsgeräte gelöst werden muß, um die zusätzlichen Installationsgeräte in das System mit einfügen zu können. Gleiches gilt für den Fall, daß einzelne Installationsgeräte ausgewechselt werden müssen, sei es deshalb, weil sie defekt sind, oder dann, wenn beispielsweise anstelle eines Installationsgerätes mit einer geringeren Nennleistung ein solches mit einer höheren Nennleistung eingesetzt werden soll.

Eine Niederspannungsverteilung, bei welcher der eben genannte Nachteil vermieden wird, ist der EP 0 229 590 A1 zu entnehmen. Bei dieser bekannten Kontstruktion ist es vorgesehen, die aufzunehmenden Installationsgeräte nahe ihrer Unterseite bzw. ihrer Befestigungsebene mit schwalbenschwanzförmigen Aussparungen zu versehen, in welche jeweils sowohl eine sogenannte Stecktulpe, d. h. ein klemmbackenartiges Kontaktorgan, als auch ein Arretierschieber einfügbar sind. Sowohl diese Aussparung als auch der Arretierschieber sind mit quer zum Verlauf der Aussparung versehenen Ausnehmungen versehen, in welche seitliche Führungsplättchen der Stecktulpe einzugreifen vermögen. In einem gesonderten Arbeitsgang, der vorzugsweise am Aufstellungsort der Niederspannungsverteilung vorzunehmen ist, können diese Stecktulpen in unterschiedlichen Positionen am Installationsgerät befestigt und mittels des Arretierschiebers fixiert werden. Die Stecktulpen selbst sind mit flexiblen Leitungen verbunden, welche in eine Anschlußkontaktstelle des jeweiligen Installationsgerätes einfügbar und hierin kontaktierend befestigbar sind. Diese Stecktulpen kontaktieren nun mit einem Schienensystem, das in einem ausladenden Stecksockel gehalten ist. Die Verwendung eines solchen Stecksockels hat zur Folge, daß die gesamte Bauhöhe einer aus Installationsgeräten und Stecksockel gebildeten Einheit deutlich vergrößert ist, was bei dem diese Niederspannungsverteilung aufnehmenden Schrank oder Gerüst berücksichtigt werden muß. Außerdem ist die Konstruktion, was die Halterung und kontaktierende Verbindung der Stecktulpen betrifft, aufwendig, und zwar sowohl bezüglich der erforderlichen Teile als auch der Notwendigkeit, diese Stecktulpen jeweils in die erwünschte Position bringen zu müssen, was - wie oben bereits ausgeführt - in aller Regel erst am Aufstellungsort geschehen kann oder wird.

Ausgehend von dem zuletzt genannten Stand der Technik stellt sich die vorliegende Erfindung zur Aufgabe, ein Anschlußsystem für Stromschienen der zur Rede stehenden Art zu schaffen, welches die geschilderten Nachteile vermeidet und auch hinsichtlich des erforderlichen Aufwandes möglichst preisgünstig und platzsparend herstellbar ist. Konkret ausgedrückt soll das zu schaffende Anschlußsystem eine Ergänzung der vorhandenen Installationsgeräte oder ein Auswechseln vorhandener Installationsgeräte gestatten, ohne den gesamten Stromschienenblock vorübergehend entfernen oder mindestens die vorhandenen Schraubverbindungen lösen zu müssen, es soll gleichzeitig vermieden werden, die erforderliche Bauhöhe nennenswert zu vergrößern und schließlich soll vermieden werden, am Aufstellungsort noch Handhabungen an den einzelnen Installationsgeräten vornehmen zu müssen, abgesehen von einem einfachen Aufsteckvorgang.

Diese Aufgabe wird erfindungsgemäß dadurch gelöst, daß die Kontaktorgane der mit den Stromschienen zu kontaktierenden Installationsgeräte in diesen fest und unverschieblich gehalten und im übrigen so gelegen sind, daß sie - bezogen auf eine zum Tragorgan gerichtete Abschlußebene der Gehäuse der Installationsgeräte - oberhalb einer Aussparung in diesen Gehäusen enden, daß weiterhin in diese Aussparungen ein den auf diesem Tragorgan angeordneten Installationsgeräten gemeinsamer Stromschienenblock einfügbar ist, der über die Aussparungen nicht oder nur unwesentlich hinausragt, und schließlich, daß von den einzelnen Stromschienen des Stromschienenblocks in Abständen angeordnete, an sich bekannte Kontaktlaschen ausgehen, die sich bei der Montage der Installationsgeräte in deren Kontaktorgane kontaktierend einfügen. Durch die feste und unverschiebliche Halterung der einzelnen Kontaktorgane in ihren Installationsgeräten erübrigt sich ein Einstellvorgang am Aufstellungsort einer Verteileranlage, wie dieses bei der vorbekannten Anlage erforderlich ist. Durch die Anordnung von Aussparungen in den Installationsgeräten, in welche der allen Installationsgeräten gemeinsame Stromschienenblock einfügbar ist, verändert sich auch die Bauhöhe der gesamten Einheit nicht oder höchstens unwesentlich, und durch die Stecktechnik, die eine etwa senkrecht zur Aufnahmeebene des Tragorgans erfolgende Zuführung der einzelnen Installationsgeräte zu den Laschen der Stromschienen vorsieht, ist es auch möglich, einzelne Installationsgeräte nachträglich anzufügen oder bereits vorhandene Installationsgeräte gegen andere auszuwechseln, ohne benachbarte Installationsgeräte in irgendeiner Weise zu beeinträchtigen.

Eine vorteilhafte Ausgestaltung des Erfindungsgedankens ist in dem Vorschlag zu sehen, den Stromschienenblock mit drei parallel zueinander verlaufenden Stromschienen auszustatten, wobei die Kontaktlaschen der beiden äußeren Kontaktschienen derart zur Erstreckungsebene der mittleren Stromschiene abgekröpft sind, daß die Kontaktlaschen aller Stromschienen in einer gemeinsamen Ebene gelegen sind und miteinander fluchten.

Eine andere zweckmäßige Ausgestaltung insbesondere des Stromschienenblocks kann darin gesehen werden, an dessen Längsenden Befestigungsöffnungen vorzusehen. Hierdurch ist es möglich, den Stromschienenblock gesondert und für sich in der Verteileranlage zu halten, anstatt ihn nur über die Kontaktlaschen zu fixieren, die in die Kontaktorgane der Installationsgeräte hineinragen.

Die letztgenannte Ausgestaltungsmöglichkeit bedingt allerdings, daß die einzelnen Stromschienenblöcke stets eine vorgegebene Länge aufweisen, die einem entsprechenden Platzangebot innerhalb der Verteileranlage entspricht. Einer anderen Gestaltungsmöglichkeit zufolge kann es jedoch zweckmäßig sein, den Stromschienenblock an seinen Längsenden mit isolierenden Abschlußkappen auszustatten, in denen zugleich Befestigungsöffnungen angeordnet sind. Dieses hat den Vorteil, daß ein Stromschienenblock in der erwünschten Länge von einem - wie man zu sagen pflegt - endlos langen Stromschienenblock ablängbar ist, und zwar jeweils in einer erwünschten Länge. Durch die Anfügung entsprechender Abschlußkappen oder äquivalenter Endstücke ist die feste Halterung der einzelnen Stromschienenblöcke dann dennoch realisierbar.

Anhand von in der Zeichnung dargestellten Ausführungsbeispielen und den nachfolgenden Erläuterungen hierzu sollen der Erfindungsgegenstand und seine vorteilhaften Ausgestaltungsmöglichkeiten noch einmal erklärt und verdeutlicht werden.

Es zeigt:

Figur 1    in perspektivischer Darstellung eine Reihe von nebeneinander auf einem Tragorgan angereihten Installationsgeräten, deren Stromeinspeisung über einen Stromschienenblock erfolgt,

Figur 2    eine Seitensicht auf ein mit einem Stromschienenblock kontaktierend verbundenes, nur teilweise dargestelltes gezeigtes Installationsgerät und

Figur 3    in perspektivischer Sicht einen Stromschienenblock mit einem etwas entfernt dargestellten Endstück.

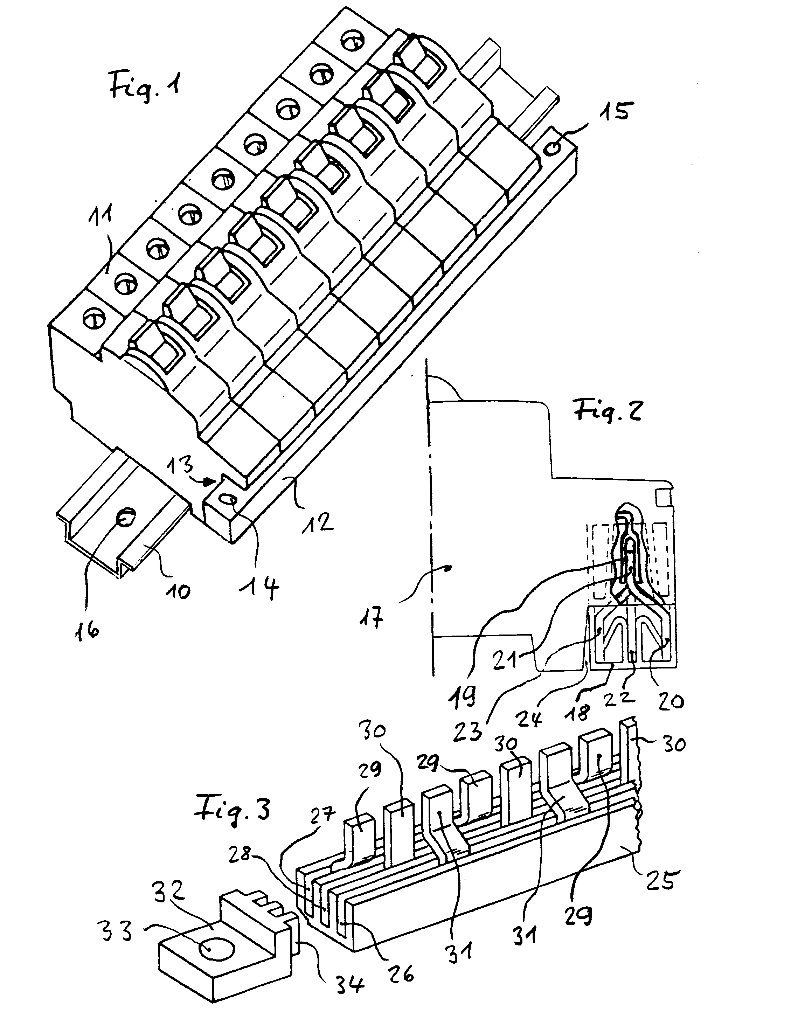

Die **Figur 1** veranschaulicht in perspektivischer Darstellung eine auf einem Tragorgan 10 in Gestalt einer sogenannten Hutprofilschiene aneinandergefügte Reihe von elektrischen Installationsgeräten 11 in einer Schmalbauweise, zu deren Stromeinspeisung ein mehrphasiger Stromschienenblock 12 dient. Dieser Stromschienenblock 12, dessen genauere Konstruktion dieser Darstellung nicht zu entnehmen ist, fügt sich in Aussparungen 13 ein, die an den Gehäusen der elektrischen Installationsgeräte 11 vorhanden sind. Erwähnenswert ist noch, daß der Stromschienenblock 12, hier in etwas vereinfachter Darstellung gezeigt, an seinen Längsenden Öffnungen 14 und 15 aufweist, die einer gesonderten Befestigung des Stromschienenblocks 12 dienen können. Mindestens eine, vorzugsweise jedoch mehrere oder viele solcher Baueinheiten sind einer Verteileranlage für Niederspannung zugeordnet und in dieser befestigt. Eine solche Befestigung kann beispielsweise mittels Schraubelementen erfolgen, welche durch Öffnungen im Tragorgan 10, erkennbar in dieser Darstellung ist eine Befestigungsöffnung 16, geführt sind und dieses Tragorgan 10 mit entsprechenden Halteleisten oder dergleichen in der Verteileranlage verbinden. Aus Vereinfachungsgründen ist die Verteileranlage selbst nicht dargestellt worden.

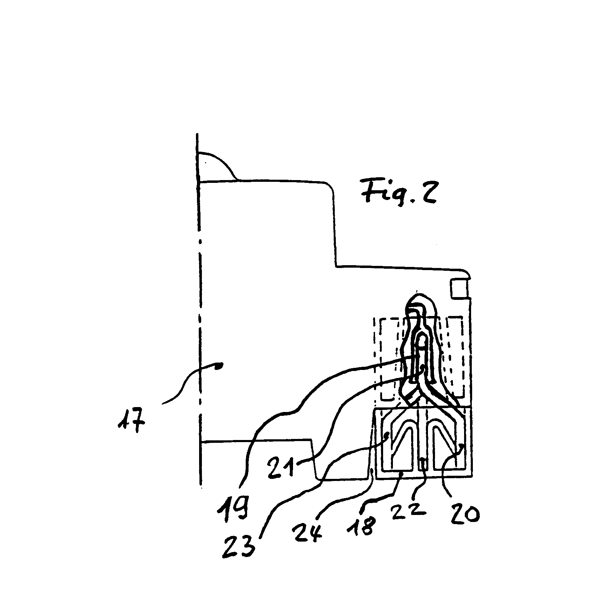

Die **Figur 2** zeigt eine Seitensicht auf ein teilweises dargestelltes Installationsgerät 17, welches kontaktierend mit einem Stromschienenblock 18 verbunden ist. Hierzu ist im Inneren des Installationsgerätes 17, wie hinter einem ausgebrochenen Teil der zum Betrachter gekehrten Seitenwandung des Installationsgerätes erkennbar, ein klemmbakkenartig zusammenfederndes Kontaktorgan 19 fest und unverschieblich gehalten und dort so angeordnet, daß es eine von einer Stromschiene 20 ausgehende Kontaktlasche 21 zwischen sich - kontaktierend - aufzunehmen vermag. In diesem Zusammenhang sei erwähnt, daß von der Stromschiene 20 in vorbestimmten Abständen weitere Kontaktlaschen ausgehen, wobei diese Abstände so gewählt sind, daß jedes dritte einer Reihe von nebeneinander gelegenen Installationsgeräten auf die dargestellte Weise kontaktiert werden kann. Im übrigen ist erkennbar, daß der Stromschienenblock 18 zwei weitere Stromschienen, nämlich die mit den Ziffern 22 und 23 versehenen, in sich aufnimmt. Auch von diesen letztgenannten Stromschienen 22 und 23 gehen entsprechende Kontaktlaschen aus. Es ist auch erkennbar, daß die Kontaktlaschen der beiden äußeren Stromschienen 20 und 23 derart zur Erstreckungsebene der mittleren Stromschiene 22 hin abgekröpft sind, daß die Kontaktlaschen aller Stromschiene in einer gemeinsamen Ebene gelegen sind und miteinander fluchten. Hierdurch ist es möglich, die Kontaktorgane (19) aller Installationsgeräte völlig gleich und gleich positioniert auszuführen.

Weiterhin ist dieser Figur 2 zu entnehmen, daß das Gehäuse des elektrischen Installationsgerätes 17 eine Aussparung 24 aufweist, in die sich der Stromschienenblock 18 einfügt, und zwar derart, daß er über die (bezogen auf die Darstellung) untere Abschlußebene des Installationsgerätes 17 nicht hinausragt und - jedenfalls bei dieser Ausgestaltungsform - auch nicht über die (in der Darstellung) rechts gelegene Wandung des Installationsgerätes 17 hinausragt. Letzteres ist beim in der Figur 1 gezeigten Ausführungsbeispiel insoweit anders ausgeführt, als dort der Stromschienenblock 12 sehr wohl um einen gewissen Betrag über die Schmalwandung der Installationsgeräte 11 hinausragt.

Die **Figur 3** veranschaulicht schließlich, wiederum in perspektivischer Darstellung, einen Stromschienenblock 25, welcher zunächst einmal aus einem Isolierstoffprofil mit drei darin ausgeformten Aufnahmetaschen 26, 27 und 28 besteht. Diese Aufnahmetaschen 26 bis 28 verleihen dem besagten Kunststoffprofil einen kammartigen Querschnitt. Innerhalb dieser Aufnahmetaschen 26 bis 28 sind drei Stromschienen angeordnet, deren Schienenbereiche allerdings nicht erkennbar sind; sichtbar sind lediglich die von den einzelnen Stromschienen ausgehenden Kontaktlaschen. Von der in der Darstellung am weitesten hinten gelegene Stromschiene gehen Kontaktlaschen 29 aus, von der benachbart gelegenen Stromschiene weitere Kontaktlaschen 30 und schließlich von der dritten, am weitesten vorne gelegenen Kontaktschiene gehen die Kontaktlaschen 31 aus. Die Kontaktlaschen 30 der mittig gelegenen Stromschiene sind hierbei völlig gleichebenig mit ihrer Stromschiene, die Kontaktlaschen 29 und 31 der beiden äußeren Stromschienen hingegen sind wie erkennbar abgekröpft, und zwar auch hier wiederum derart, daß schließlich die Kontaktlaschen aller Stromschienen in einer gemeinsamen Ebene, nämlich der der mittleren Stromschiene, gelegen sind und miteinander fluchten. Die beiden äußeren Stromschienen mit ihren Kontaktlaschen stellen hierbei völlig gleiche Teile dar, die nur seitenverkehrt zueinander zu montieren sind. Die mittige Stromschiene hingegen stellt ein anders geformtes Teil dar, d. h. ihre Kontaktlasche sind, wie oben bereits erwähnt, nicht in irgendeiner Weise abgekröpft.

Die Kontaktierung aller Kontaktlaschen 29, 30 und 31 mit zugeordneten Installationsgeräten erfolgt in praktisch gleicher Weise, wie dieses in der Figur 2 dargestellt und oben bereits beschrieben worden ist.

Zur Halterung des in der Figur 3 gezeigten Stromschienenblocks 25 können an dessen Längsenden Abschlußkappen oder Halbkappen vorgesehen sein, statt dessen aber auch Endstücke, wie ein solches dieser Darstellung zu entnehmen und mit der Ziffer 32 versehen ist. Dieses Endstück 32 hat die Gestalt eines Winkels, in dessen einem Schenkel eine Befestigungsöffnung 33 angeordnet ist und von dessen anderem Schenkel nach außen hin vorspringende Rippen 34 ausgehen. Diese Rippen 34 greifen - in montierter Lage des Endstückes 32 - in die Aufnahmetaschen 26, 27 und 28 des Stromschienenblocks 25, d. h. also in dessen Isolierstoffprofil ein. Auf diese Weise ist eine sehr einfache und sichere Halterung des Stromschienenblocks 25 auf einer entsprechenden Befestigungsebene möglich. Ein derartiger Stromschienenblock kann von sogenannten endlosen Stangen abgelängt und auf diese Weise unterschiedlichen Bedarfsfällen, was die Länge betrifft, angepaßt werden.

Wie eingangs der Beispielsbeschreibung bereits zum Ausdruck gebracht, veranschaulichen die einzelnen Darstellungen lediglich Ausführungsbeispiele des Erfindungsgedankens. Mannigfache Abweichungen von den dargestellten Ausführungsformen sind denkbar und realisierbar, ohne den eigentlichen Erfindungsgedanken zu verlassen. Dieses betrifft sowohl die speziellen Ausgestaltungsmöglichkeiten für einen Stromschienenblock als auch für dessen Halterung und - wenigstens in einem gewissen Ausmaß - auch die Gestaltung der Installationsgeräte, und zwar sowohl was deren Aussparungen (24, Figur 2) betrifft, als auch Gestaltung und Ausmaß der Kontaktorgane innerhalb der Installlationsgeräte.

**Patentansprüche**

1. Verteileranlage mit auf wenistens einem Tragorgan nebeneinander anreihbaren elektrischen Installationsgeräten in Schmalbauweise, deren Stromeinspeisung mittels mehreren, den Installationsgeräten auf diesem Tragorgan gemeinsam zugeordneten Stromschienen bzw. mittels eines mehrphasigen Stromschienenblocks erfolgt, wobei an den Installationsgeräten angeordnete klemmbackenartig zueinander federnde Kontaktorgane bei einer angenähert senkrecht zur Aufnahmeebene des Tragorgans erfolgenden Zuführung der Installationsgeräte an das Tragorgan jeweils eine zugeordnete Stromschiene beidseitig kontaktieren, dadurch gekennzeichnet, daß die Kontaktorgane (19) der mit den Stromschienen (20, 22, 23 in 18) zu kontaktierenden Installationsgeräte (11; 17) in diesen fest und unverschieblich gehalten und so gelegen sind, daß sie - bezogen auf eine zum Tragorgan gerichtete Abschlußebene der Gehäuse der Installationsgeräte - oberhalb einer Aussparung (13; 24) in diesen Gehäusen enden, daß in diese Aussparungen ein den an diesem Tragorgan angeordneten Installationsgeräten gemeinsamer Stromschienenblock (18; 25) einfügbar ist, der über die Aussparungen nicht oder nur unwesentlich hinausragt, und daß von den einzelnen Stromschienen des Stromschienenblocks (18; 25) in Abständen angeordnete, an sich bekannte Kontaktlaschen (21; 29, 30, 31) ausgehen, die sich bei der Montage der Installationsgeräte in deren Kontaktorgane kontaktierend einfügen.

2. Verteileranlage nach Anspruch 1, dadurch gekennzeichnet, daß der Stromschienenblock (18; 25) mit drei parallel zueinander verlaufenden Stromschienen (20, 22, 23) ausgestattet ist, wobei die Kontaktlaschen (21; 29, 31) der beiden äußeren Stromschienen (20, 23) derart zur Erstreckungsebene der mittleren Stromschiene (22) hin abgekröpft sind, daß die freien Enden der Kontaktlaschen aller Stromschienen in einer gemeinsamen Ebene gelegen sind und miteinander fluchten.

3. Verteileranlage nach Anspruch 1 oder 2, dadurch gekennzeichnet, daß der Stromschienenblock (12) an seinen Längsenden mit Befestigungsöffnungen (14, 15) versehen ist.

4. Verteileranlage nach Anspruch 1 oder 2, dadurch gekennzeichnet, daß der Stromschienenblock (25) an seinen Längsenden mit isolierenden Abschlußkappen oder Endstücken (32) versehen ist, in denen zugleich Befestigungsöffnungen (33) angeordnet sind.

Fig. 1

Fig. 2

Fig. 3

Fig. 2